# EUROPEAN PATENT SPECIFICATION

(11) **EP 3 536 533 B1**
(45) Date of publication and mention of the grant of the patent: **10.06.2020**
(21) Application number: 19160219.2
(22) Date of filing: 01.03.2019
(51) Int. Cl.: B60K 35/00, G02B 27/01

(54) **VEHICULAR PROJECTION DISPLAY APPARATUS**
FAHRZEUGPROJEKTIONSANZEIGEVORRICHTUNG
APPAREIL D'AFFICHAGE PAR PROJECTION DE VÉHICULE

(30) Priority: 07.03.2018 JP 2018041024
(43) Date of publication of application: 11.09.2019
(73) Proprietor: YAZAKI CORPORATION, Minato-ku, Tokyo 108-8333 (JP)
(72) Inventor: ISHIBASHI, Atsushi, Susono-shi, Shizuoka (JP)
(74) Representative: Grünecker Patent- und Rechtsanwälte PartG mbB

(56) References cited:
- WO-A1-2017/094427
- WO-A1-2017/134861
- JP-A- 2015 134 521
- US-A1- 2014 368 540

## Description

### [Technical Field]

The present invention relates to a vehicular projection display apparatus for projecting visible information in or in the vicinity of the field of view of a driver while he or she is driving a vehicle.

### [Background Art]

In vehicles such as automobiles, a head-up display (HUD) may be used to display information that is necessary for the driver. When the head-up display is used, visible information is projection-displayed as a virtual image that is visible to the driver through the windshield so as to be superimposed on a scene (a road etc.) in the field of view of the driver or be viewed in the vicinity of the scene.

As a result, where information is displayed using a head-up display, the driver can view, at the same as he or she views a scene indicating a road situation etc. that are necessary for driving, a virtual image displayed in the same field of view as the scene without the need for moving the viewing point to a large extent.

On the other hand, Patent document 1, which relates to a drive assist information display apparatus, discloses a technique for increasing the visibility of an obstacle located outside a vehicle in the case where a head-up display or the like is used. More specifically, the drive assist information display apparatus is equipped with a control unit for displaying drive assist information on a display screen, an obstacle detection unit for detecting a position of an obstacle located outside a vehicle, and an eyeball detection unit for detecting a position of the eyeballs of a driver. The control unit changes the display position of drive assist information to a position that is not located on the straight line connecting the position of the eyeballs and the position of the obstacle on the basis of the detected positions of the eyeballs and the obstacle.

[Patent document 1] JP-A-2017-149335

JP 2015 134521 A relates to a head-up display device capable of displaying several pieces of information to a driver of a vehicle, wherein the position of certain information may be changed so as not to overlap with detected obstacles.

WO 2017/134861 A1, US 2014/368540 A1 and WO 2017/094427 A1 each relate to head-up display devices capable of displaying pieces of information to a driver of a vehicle, wherein said pieces of information may be relocated so as not to overlap detected obstacles.

Where a head-up display is used, an actually existing real image and a virtual image projected by the head-up display appear in the field of view of a driver so as to be superimposed on each other. It is therefore possible, by employing an AR (augmented reality) technique, to display the virtual image by the head-up display in such a manner that it is recognized visually by the driver as part of an augmented version of the real image.

For example, it is possible to virtually display a virtual image of an actually non-existent road sign, mark, or the like at a proper position with a proper size 2a on the surface of a road or beside a road so that it is superimposed on real images as if it existed actually by correctly determining the display position of the virtual image in the three-dimensional space where the real images exist. This type of head-up display is called a superimposition-type head-up display or an AR-HUD.

However, where such a superimposition-type head-up display is used, there may occur a situation that a virtual image that is displayed virtually renders less visible an important real image that a driver should recognize visually (e.g., an obstacle such as a pedestrian or another vehicle). This may make it difficult to secure the safety of a drive or cause the driver to feel a virtual image displayed in his or her field of view to be annoying.

One option for solving the above problem would be to employ the technique disclosed in Patent document 1. However, simply moving a virtual image that is virtually displayed on the straight line connecting the position of the eyeballs of a driver and the position of an obstacle to a position where the virtual image is not superimposed on the straight line may cause other problems.

For example, if a driver moves his or her line of sight so as to follow a moved virtual image though he or she is not aware of a nearby obstacle, finding of the obstacle may be delayed to lower the safety of the drive. Conversely, where a displayed virtual image that the driver wants to recognize visually is moved to another position though he or she has recognized an obstacle sufficiently, the driver needs to move his or her line of sight to a large extent every time the virtual image is moved. As a result, the driver would feel this kind of display annoying.

Where another obstacle exists in the vicinity of an obstacle that has been recognized by a driver, the line of sight of the driver may be moved while the driver is aware of only one of the two obstacles. This is another case that the safety of a drive is lowered. Furthermore, if only a displayed virtual image that is superimposed on an obstacle is moved to another position in the case where plural virtual images are displayed at different positions, the plural displayed virtual images may be arranged so as to be difficult to recognize visually as a whole set. The driver would feel this kind of display annoying.

The present invention has been made in view of the above circumstances, and an object of the invention is therefore to provide a vehicular projection display apparatus that allows a driver to easily recognize an obstacle that has newly appeared or has been increased in the degree of importance and to suppress the probability that a driver feels displayed contents annoying.

To attain the above object, the invention provides vehicular projection display apparatus having features that are defined in the independent claim. The dependent claims describe advantageous embodiments.

Aspects are described below in the form of configurations (1) to (5):
(1) A vehicular projection display apparatus which projects visible information in or in the vicinity of a field of view of a driver so that the visible information is superimposed on real images, comprising:
   a display information generation unit which generates pieces of information representing plural respective display contents to be presented to the driver;
   a priority rank assigning unit which assigns display priority ranks to the plural respective display contents generated by the display information generation unit;
   an obstacle detection unit which detects an obstacle that may influence driving of a vehicle; and
   a display position adjusting unit which relocates the display positions of the plural display contents according to the priority ranks assigned by the priority rank assigning unit, respectively, at least when the obstacle detection unit has detected a new obstacle, characterized in that the display position adjusting unit monitors degrees of importance and their variations of the plural respective display contents and, if detecting a display content whose variation in the degree of importance is larger than a prescribed value, relocates the display positions of the plural display contents according to the priority ranks assigned to the plural display contents, respectively.
(2) The vehicular projection display apparatus according to the aforementioned configuration (1), wherein the display position adjusting unit compares a first priority rank that is assigned to a particular display content relating to the new obstacle detected by the obstacle detection unit with priority ranks assigned to the others of the plural display contents and sets display contents whose priority ranks are lower than the first priority rank as targets of the relocation.
(3) The vehicular projection display apparatus according to the aforementioned configuration (1), wherein the display position adjusting unit moves, among the plural display contents, display contents other than a particular display content that requires superimposition of display visible information on a real image to prescribed regions that are closer to the driver than display positions before the movement and continues to display the display contents moved.
(5) The vehicular projection display apparatus according to any one of the aforementioned configurations (1) to (3), wherein if a display content that has been moved by the relocation is superimposed on a region of an obstacle detected by the obstacle detection unit, the display position adjusting unit again moves the display content to outside the region of the obstacle.

In the vehicular projection display apparatus having the aforementioned configuration (1), the display position adjusting unit relocates plural display contents when a new obstacle is detected, whereby a state is established that the driver can easily recognize the new obstacle detected. Furthermore, since the resulting display positions reflect the priority ranks assigned to the respective display contents, display contents having high priority ranks and those having low priority ranks can be relocated under different conditions. This makes it possible to prevent the driver from feeling displayed virtual images annoying while allowing the driver to recognize an obstacle more easily.

In the vehicular projection display apparatus having the aforementioned configuration (2), display contents whose priority ranks are lower than the priority rank of a particular display content for allowing the driver to easily recognize the new obstacle detected. This makes it possible to, for example, emphasize the presence of the particular display content and thereby allows the driver to realize the new obstacle more easily.

According to the vehicular projection display apparatus having the aforementioned configuration (3), since display contents other than a particular display content, that is, display contents that relate to real images only weakly, are moved to positions close to the driver, a state is established that the driver can recognize these display contents more easily and hence is prevented from feeling their movements annoying. Furthermore, by displaying these display contents so as to be superimposed of real images except when they are relocated, stereoscopic display that is suitable for the real images, for example, can be made, which would be impressive to the driver.

According to the vehicular projection display apparatus having the aforementioned configuration (4), even without detection of a new obstacle, plural display contents can be relocated so as to reflect a change in a drive state. For example, display contents can be relocated when their degrees of importance have increased as in a case that an obstacle has approached the vehicle suddenly after a long period when no such event occurred. Performing relocation only when it is detected that the degree of importance of each display content has increased by a prescribed value or more makes it possible to avoid frequent occurrence of relocation, and the driver is prevented from being annoyed by such an event.

According to the vehicular projection display apparatus having the aforementioned configuration (5), even if a display position of a display content after the movement is not proper, the display content can be prevented from being superimposed on an obstacle region by moving it again. Lowering in the visibility of the obstacle can thus be avoided.

### [Advantages of the invention]

The vehicular projection display apparatus according to the invention allows a driver to easily recognize an obstacle that has newly appeared or has been increased in the degree of importance and to suppress the probability that a driver feels displayed contents annoying.

The invention has been described above concisely. The details of the invention will become more apparent when the modes for carrying out the invention (hereinafter referred to as an embodiment) described below are read through with reference to the accompanying drawings.

### [Brief Description of the Drawings]

[Fig. 1] Fig. 1 is a side view of a vehicle body of a vehicle in which a vehicular projection display apparatus according to an embodiment of the present invention is installed and is partially a block diagram outlining how its major constituent elements are laid out and connected to each other.
[Fig. 2] Fig. 2 is a front view showing example images etc. in the front field of view of a driver who is driving the vehicle.
[Fig. 3] Figs. 3A and 3B are front views showing examples of a real image(s) and virtual images of displayed contents in the front field of view of the driver of the vehicle.
[Fig. 4] Fig. 4 is a perspective view showing an example relationship between the eye point of the driver, the line of sight, and images.
[Fig. 5] Fig. 5 is a front view showing an example relationship between a real image of a detected obstacle, the visual attention point of the driver, and individual regions.
[Fig. 6] Fig. 6 is a front view showing another example relationship between a real image of a detected obstacle, the visual attention point of the driver, and individual regions.
[Fig. 7] Figs. 7A and 7B are front views showing further example relationships between a real image of a detected obstacle, the visual attention point of the driver, and individual regions.
[Fig. 8] Fig. 8 is a flowchart showing a first example main operation of the vehicular projection display apparatus.
[Fig. 9] Fig. 9 is a flowchart showing a second example main operation of the vehicular projection display apparatus.

### [Modes for Carrying Out the Invention]

A specific embodiment of the present invention will be hereinafter described with reference to the drawings.

### <Example configuration of vehicular projection display apparatus>

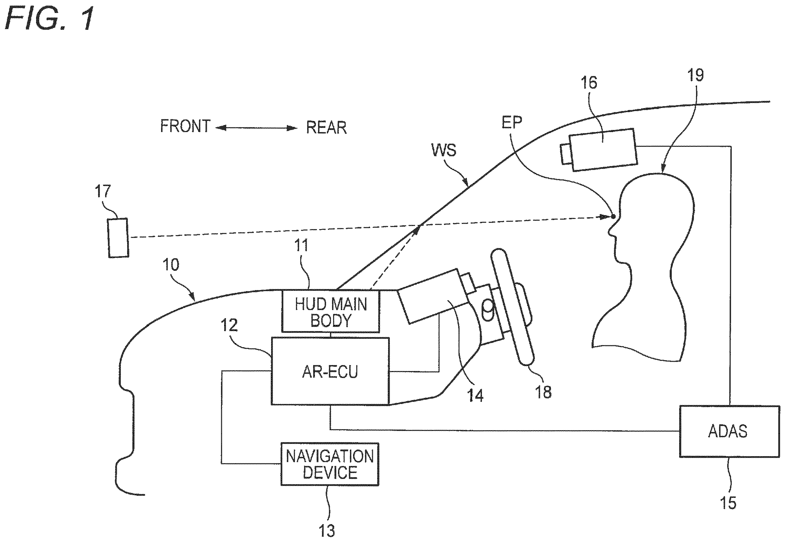

Fig. 1 is a side view of a vehicle body 10 of a vehicle in which a vehicular projection display apparatus according to the embodiment of the invention is installed and is partially a block diagram outlining how its major constituent elements are laid out and connected to each other. In Fig. 1, the left side and the right side correspond to the front side and the rear side of the vehicle body 10, respectively.

The vehicular projection display apparatus shown in Fig. 1 is equipped with a HUD main body 11, a superimposition drawing control unit (AR-ECU) 12, a navigation device 13, a line-of-sight detection device 14, an advanced driver assistance system (ADAS) 15, and an obstacle detection device 16.

The HUD main body 11 can project an image displayed on a two-dimensional screen of a liquid crystal display or the like onto the windshield WS using illumination light such as backlight. Light that is projected by the HUD main body 11 and forms an optical image on the windshield WS is reflected by the windshield WS or a combiner disposed in its vicinity and goes toward an eye point EP of a driver 19.

Thus, a driver 19 can visually recognize the image projected by the HUD main body 11 as a virtual image 17 that is formed as if to exist in front of the windshield WS. Since the driver 19 views an outside scene such as a road surface through the windshield WS as real images, he or she can visually recognize, at the same time, these real images and the virtual image 17 projected by the HUD main body 11 in such a manner that the latter is superimposed on the former.

The superimposition drawing control unit 12 is an electronic control unit having a function of generating various display contents to be projected by the HUD main body 11 and drawing them on a screen. The superimposition drawing control unit 12 employed in the embodiment also has a function of realizing augmented reality (AR). More specifically, the superimposition drawing control unit 12 controls the display position, the size, etc. of display contents to be projected as virtual images 17 by the HUD main body 11 so that the driver 19 can visually recognize them as if they existed in a three-dimensional real space. That is, the superimposition drawing control unit 12 successively determines a position and a size of each display content according to a variation of the situation so that they reflect the position of the eye point EP of the driver 19 and sets of coordinates of a scene etc. in the three-dimensional real space that can be visually recognized by the driver 19 actually whose eye point EP is located at that position.

The navigation device 13 provides precise map information and information representing a road situation around the self vehicle. More specifically, the navigation device 13 measures a position of the self vehicle using a GPS (global positioning system) receiver and acquires necessary information using the Intelligent Transport Systems (ITS). The Intelligent Transport Systems can provide information that is necessary to solve various road-traffic-related problems such as a traffic accident, a congestion, and an environmental measure by exchanging information between persons, roads, and vehicles.

The line-of-sight detection device 14 has a function of acquiring information relating to a line-of-sight direction of the driver 19. More specifically, the line-of-sight detection device 14 can acquire information relating to a line-of-sight direction of the driver 19 by detecting a position of his or her face, positions of his or her eyeballs, directions of the eyeballs, etc. with a camera that is installed on an instrument panel in the vicinity of a steering wheel 18 and performing calculation.

The advanced driver assistance system 15 has a function of recognizing an obstacle, positions on a road surface, etc. that relate to driving of the vehicle using the obstacle detection device 16 and various other sensors. Provided with such as a millimeter-wave radar or a sensor using an infrared laser, the advanced driver assistance system 15 can detect various obstacles, positions and shapes of respective portions of a road on which the vehicle is running, positions of respective running lanes of the road, and other things by, for example, scanning a prescribed area ahead of the vehicle in its running direction.

The obstacle detection device 16, which includes a vehicular stereoscopic camera for shooting, for example a scene ahead of the vehicle, can detect positions and distances of various obstacles that may influence driving of the vehicle such as a pedestrian around the vehicle and other vehicles on the basis of a video taken by the vehicular stereoscopic camera.

### <Specific example-1 of images etc. in front field of view>

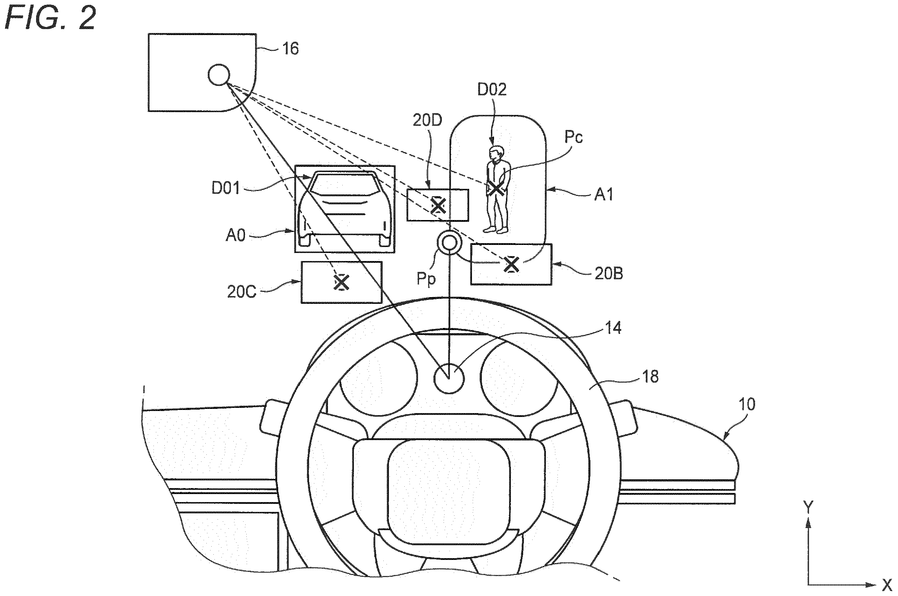

Fig. 2 shows example images etc. in the front field of view of the driver 19 who is driving the vehicle. In Fig. 2, the X-axis direction is the left-right direction of the vehicle and the Y-axis direction is the top-bottom direction of the vehicle. The direction perpendicular to the paper surface of Fig. 2 and going away from the reader is the advancement direction of the vehicle, that is, the depth direction of the field of view (Z-axis direction).

In the example of Fig. 2, two independent detected obstacles D01 and D02 detected by the obstacle detection device 16 exist in the front field of view. The detected obstacles D01 and D02 are a preceding vehicle and a pedestrian, respectively.

In Fig. 2, a display prohibition region A0 which is a rectangular region surrounding the detected obstacle D01 is a region where display of a virtual image is prohibited to prevent an event that a virtual image displayed by the HUD main body 11 obstructs visual recognition of the detected obstacle D01. A display prohibition region A1 which is a rectangular region surrounding the detected obstacle D02 is a region that is assigned to prevent an event that a virtual image obstructs visual recognition of the detected obstacle D02. A display prohibition region such as the display prohibition regions A0 and A1 is determined for each obstacle detected by the obstacle detection device 16 on the basis of its center position Pc.

A visual attention center point Pp (represented by coordinates) is a visual attention point that is located at a far position on the line of sight of the driver 19 in his or her field of view detected by the line-of-sight detection device 14. Thus, the position of the visual attention center point Pp varies when the driver 19 changes the direction of his or her line of sight by, for example, moving his or her eye point EP, head or eyes.

In the example shown in Fig. 2, pieces of visible information of various display contents generated by the superimposition drawing control unit 12 are displayed as virtual images 17 in plural respective content display regions 20B, 20C, and 20D. The positions and the display sizes of the respective content display regions 20B, 20C, and 20D are controlled by the superimposition drawing control unit 12 at each time point according to the situations of real images in the field of view of the driver 19 so that they properly serve as part of augmented reality.

Specific example display contents to be generated by the superimposition drawing control unit 12 are as follows:
(1) An attention arousing display such as a mark for allowing the driver 19 to recognize an obstacle easily.
(2) An arrow pattern to be displayed at, for example, an intersection to indicate a course change direction.
(3) A pattern of a virtual sign or road surface mark that does not exist actually on a road on which the vehicle is running.
(4) Character information indicating a running state of the vehicle such as a current vehicle speed.

The superimposition drawing control unit 12 assists a safe drive by displaying display contents as exemplified above as virtual images in the field of view of the driver 19. However, if as in the example of Fig. 2 each the content display regions 20B and 20D is located close to the detected obstacle D02 in the front field of view, the displayed virtual image may overlap with the real image and obstruct visual recognition of the real image. Furthermore, distracted by the displayed virtual images, the driver may delay in visually recognizing the detected obstacle D02 that has appeared near the displayed virtual images. To solve these problems, the superimposition drawing control unit 12 performs a control to be described later.

### <Specific example-2 of images etc. in front field of view>

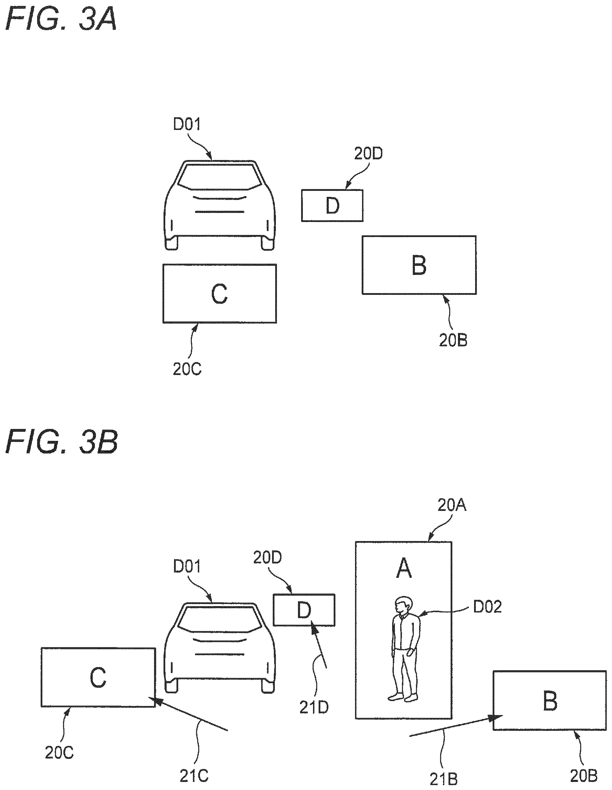

Each of Figs. 3A and 3B shows examples of a real image(s) and virtual images of displayed contents in the front field of view of the driver 19.

When the driver 19 is driving the vehicle actually on a road, there may occur a case that the images etc. in the field of view of the driver 19 change from the state shown in Fig. 3A to a state shown in Fig. 3B. In the example shown in Fig. 3A, only a detected obstacle D01 (preceding vehicle) exists as an obstacle relating to driving of the vehicle and necessary display contents are displayed as virtual images in respective content display regions 20B, 20C, and 20D. On the other hand, Fig. 3B shows a situation that a pedestrian has newly appeared as a detected obstacle D02 in addition to the detected obstacle D01.

Thus, if, for example, the driver 19 has not recognized the detected obstacle D02 yet, to assist a safe drive in the situation of Fig. 3B, it is desirable for the system to arouse attention of the driver 19 to have him or her realize the appearance of the detected obstacle D02.

In view of the above, the superimposition drawing control unit 12 displays a display content for arousing attention such as a blinking arrow pattern very close to the detected obstacle D02 (e.g., in a content display region 20A). Furthermore, the superimposition drawing control unit 12 relocates the other display contents that are low in the degree of importance so that they are moved to positions that are distant from the visual attention center point Pp and the detected obstacle D02 to prevent them from obstructing the driver 19 from visually recognizing the detected obstacle D02.

That is, the content display regions 20B, 20C, and 20D are moved in directions indicated by movement vectors 21B, 21C, and 21D shown in Fig. 3B from the positions shown in Fig. 3A to the positions shown in Fig. 3B, respectively. This establishes a state that the driver 19 can easily recognize the new detected obstacle D02.

The examples of Figs. 3A and 3B are of a case that the following four kinds of display contents CA, CB, CC, and CD exist as ones to be projection-displayed by the HUD main body 11 as virtual images 17:
CA: Content for arousing attention to an obstacle; (priority rank) = 1 (highest)
CB: Second content; (priority rank) = 2
CC: Third content; (priority rank) = 3
CD: Fourth content; (priority rank) = 4 (lowest).

The display contents CB, CC, and CD are displayed in the respective content display regions 20B, 20C, and 20D. The display content CA is displayed, for example, at a position adjacent to the obstacle region 20A. In the above example, the four kinds of display contents CA-CD are assigned respective priority ranks. The priority ranks may vary reflecting how the drive situation varies.

Thus, in relocating the content display regions 20B, 20C, and 20D in the manner shown in Fig. 3B, their destination positions are adjusted taking into consideration the priority ranks that are given to the display contents CB-CD to be displayed in the display regions 20B-20D, respectively. For example, no problem arises even if the content display region 20D where the display content CD having the lowest priority rank is to be displayed is moved to a relatively distant position. From the viewpoint of visibility, it is preferable that the display content CB having a relatively high priority rank be moved to a position close to the driver 19.

### <Specific example-1 of positional relationship>

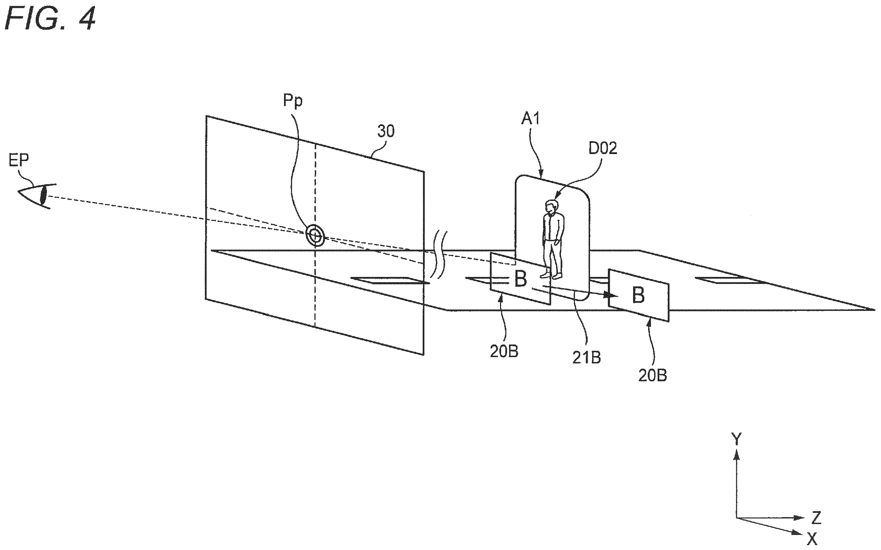

Fig. 4 shows an example positional relationship between the eye point EP of the driver 19, the line of sight, and images.

As shown in Fig. 4, a visual attention center point Pp in a two-dimensional plane 30 can be calculated on the basis of a position of the eye point EP of the driver 19 detected by the line-of-sight detection device 14 and a direction of the line of sight. Relative positional relationships in the X-axis direction and the Y-axis direction between the visual attention center point Pp and virtual images of the respective display contents to be displayed in the content display region 20B etc. located on the far side in the Z direction (i.e., the side of an extension of the line of sight), the detected obstacle D02, and the display prohibition region A1 can also be calculated.

### <Specific example-2 of positional relationship>

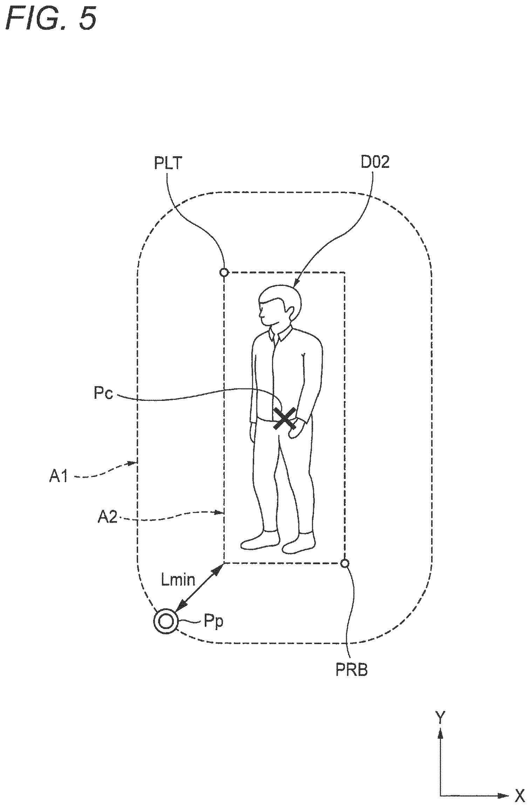

Fig. 5 shows an example relationship between a real image of a detected obstacle D02, the visual attention point of the driver 19, and individual regions.

The example shown in Fig. 5 is of a case that a pedestrian has appeared as a detected obstacle D02 in the front field of view of the driver 19 and the visual attention center point Pp is not located in an obstacle region A2.

The obstacle region A2 is determined by the superimposition drawing control unit 12 as a rectangular region surrounding an obstacle center position Pc of the detected obstacle D02 detected by the obstacle detection device 16, using the obstacle center position Pc as a reference. The obstacle region A2 is determined by, for example, a top-left coordinates PLT and a bottom-right coordinates PRB in the two-dimensional plane 30 (X-Y coordinate plane).

In the example shown in Fig. 5, a display prohibition region A1 of the detected obstacle D02 is determined on the basis of the obstacle region A2 and the visual attention center point Pp. More specifically, the display prohibition region A1 is determined as an approximately rectangular region having round corners that contains and is larger than the obstacle region A2 by a region corresponding to a distance Lmin. The distance Lmin is determined as a minimum distance between the visual attention center point Pp and the outer circumference of the obstacle region A2. However, if the distance Lmin has a width that is longer than a corresponding width of the display range of the HUD main body 11, the display prohibition region A1 is determined so that the distance Lmin is fixed so as to have a width that is equal to half of the corresponding width of the display range.

### <Specific example-3 of positional relationship>

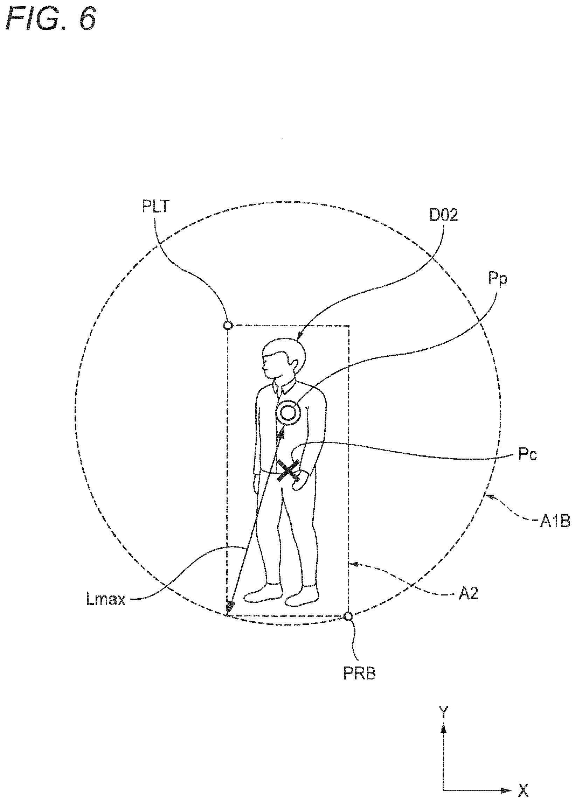

Fig. 6 shows another example relationship between a real image of a detected obstacle D02, the visual attention point of the driver 19, and individual regions.

The example shown in Fig. 6 is of a case that a pedestrian has appeared as a detected obstacle D02 in the front field of view of the driver 19 and the visual attention center point Pp is located in an obstacle region A2.

The obstacle region A2 is determined by the superimposition drawing control unit 12 as a rectangular region surrounding an obstacle center position Pc of the detected obstacle D02 detected by the obstacle detection device 16, using the obstacle center position Pc as a reference. The obstacle region A2 is determined by, for example, a top-left coordinates PLT and a bottom-right coordinates PRB in the two-dimensional plane 30 (X-Y coordinate plane).

In the example shown in Fig. 6, a display prohibition region A1B of the detected obstacle D02 is determined as a circular region that is centered at the visual attention center point Pp and has a radius that is equal to a distance Lmax. The distance Lmax is determined as a maximum distance between the visual attention center point Pp and the outer circumference of the obstacle region A2. However, if the distance Lmax has a width that is longer than a corresponding width of the display range of the HUD main body 11, the display prohibition region A1B is determined so that the distance Lmax is fixed so as to have a width that is equal to half of the corresponding width of the display range.

### <Specific example-4 of positional relationship>

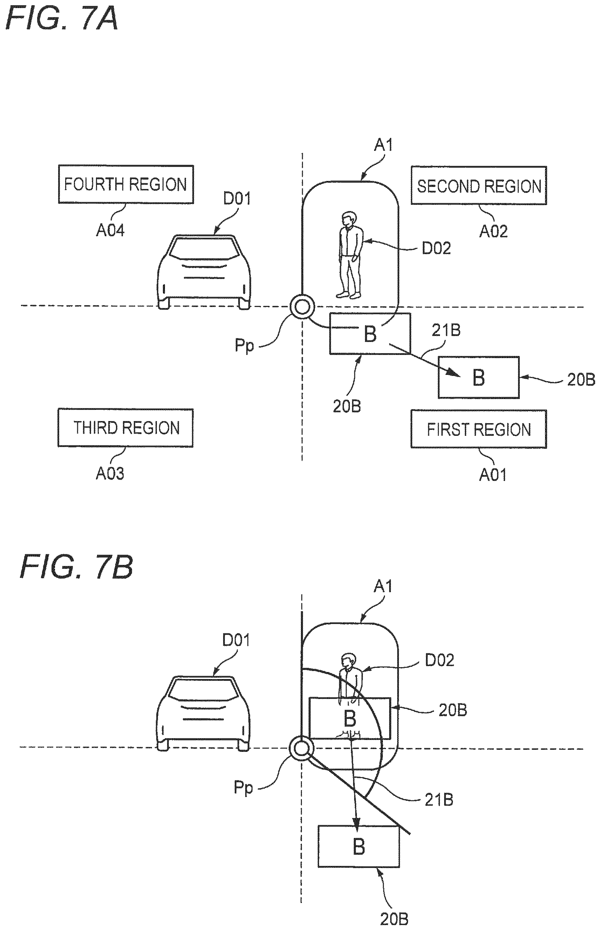

Figs. 7A and 7B show further example relationships between a real image of a detected obstacle D02, the visual attention point of the driver 19, and individual regions.

The examples shown in Figs. 7A and 7B are of a case that a the two-dimensional plane 30 located in the front field of view of the driver 19 is divided with the visual attention center point Pp as a reference into four regions, that is, a first region A01, a second region A02, a third region A03, and a fourth region A04, which are a bottom-right region, a top-right region, a bottom-left region, and a top-left region with respect to the X-Y coordinates of the visual attention center point Pp, respectively.

In the actual field of view of the driver 19, the first region A01 and the third region A03 correspond to regions that are closer in actual distance in the depth direction (Z-axis direction) than the visual attention center point Pp and the second region A02 and the fourth region A04 correspond to regions that are farther in actual distance in the depth direction than the visual attention center point Pp. In the examples shown in Figs. 7A and 7B, a detected obstacle D01 is located in the fourth region A04 and the detected obstacle D02 is located in the second region A02.

In the example shown in Fig. 7A, in an initial state, a content display region 20B is set at such a position as to overlap with a display prohibition region A1 that is assigned to the detected obstacle D02 that has newly appeared. Thus, to remove this overlap, the superimposition drawing control unit 12 moves (relocates) the content display region 20B in the direction indicated by a movement vector 21B (radial direction) away from the visual attention center point Pp.

However, even after relocation of the content display region 20B or the like in a manner as in the example shown in Fig. 7A, it may still overlap with the display prohibition region A1. In such an event, the content display region 20B or the like is relocated again as in the example shown in Fig. 7B.

In the example shown in Fig. 7B, the straight line connecting the visual attention center point Pp and the obstacle center position Pc is rotated about the visual attention center point Pp by various angles to search for an angle that prevents the content display region 20B from overlapping with the display prohibition region A1. The content display region 20B is relocated on the basis of a straight line extending in a direction of the movement vector 21B thus found so as to be located outside the display prohibition region A1.

On the display screen of a superimposition-type head-up display, virtual images can be arranged so as to be suitable for real images as in the case of augmented reality. Thus, in relocating content display regions 20B, 20C, and 20D, virtual images 17 of respective display contents can be displayed taking their positions in the depth direction into consideration. For example, when a new detected obstacle D02 has appeared, the content display regions 20B-20D are relocated, in the depth direction (Z-axis direction), to positions that are more distant from their current positions and do not cause the content display regions 20B-20D to overlap with the obstacle region A1 in the two-dimensional plane 30.

### <Example operation-1>

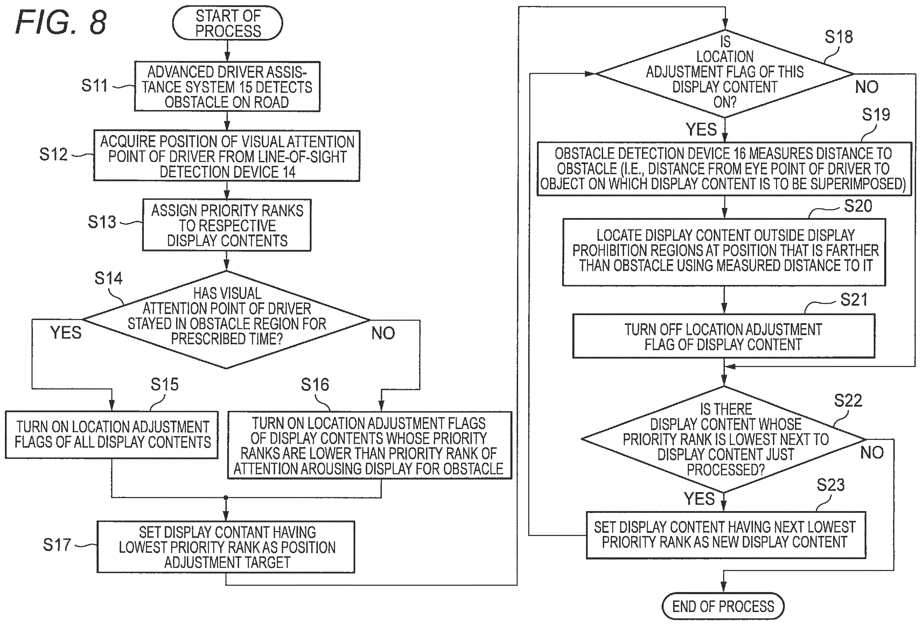

Fig. 8 shows a first example main operation of the vehicular projection display apparatus. The superimposition drawing control unit 12 causes the HUD main body 11 to project images of respective display contents that are generated when necessary and causes virtual images 17 to be superimposed on a real image(s) using the augmented reality technique. The superimposition drawing control unit 12 performs the control shown in Fig. 8 in superimposing the virtual images 17. The control shown in Fig. 8 will be described below.

At step S11, when an obstacle has come close to the display range of the HUD main body 11 in the front field of view of the driver 19, the obstacle detection device 16 or the advanced driver assistance system 15 detects the presence of the obstacle and its position and shape. The superimposition drawing control unit 12 acquires information including the position of the detected obstacle from the advanced driver assistance system 15.

At step S12, approximately at the same time as at step S11, the superimposition drawing control unit 12 acquires information indicating a latest line of sight of the driver 19 from the line-of-sight detection device 14.

At step S13, the superimposition drawing control unit 12 assigns priority ranks to plural respective display contents to be displayed by the superimposition drawing control unit 12. For example, step S13 may be executed in a process that is executed repeatedly on a regular basis. Each assigned priority rank is determined so as to reflect the degree of importance of a corresponding content. For example, the degree of importance of each content is calculated on the basis of the degree of danger and required freshness of information and a priority rank is assigned on the basis of the determined degree of importance.

The superimposition drawing control unit 12 can determine coordinates of a visual attention point (visual attention center point Pp) that is a far point on the line of sight on the basis of the information indicating (the direction of) the line of sight. If a new obstacle is detected that is approaching the display range of the HUD main body 11, at step S14 the superimposition drawing control unit 12 monitors the position information of the obstacle detected at step S11 and the coordinates of the visual attention point while comparing them and judges whether the visual attention center point Pp has stayed in an obstacle region A2 of the new obstacle for a prescribed time.

The process moves from step S14 to step S15 if the visual attention center point Pp has stayed in the obstacle region A2 for the prescribed time, that is, the driver 19 is already aware of the new obstacle. In this case, although it is not necessary to arouse attention of the driver 19 cause him or her to recognize the presence of the new obstacle, it is necessary to prevent virtual images 17 from obstructing visual recognition of this obstacle. Thus, at step S15, the superimposition drawing control unit 12 turns on location adjustment flags of all display contents.

On the other hand, the process moves from step S14 to step S16 if the visual attention center point Pp has not stayed in the obstacle region A2 for the prescribed time, that is, it is highly probable that the driver 19 is not aware of the new obstacle yet. In this case, it is important to cause the driver 19 to recognize the new obstacle early. Thus, at step S16, the superimposition drawing control unit 12 employs only display contents whose priority ranks are lower than the priority rank of a display content (CA) for arousing attention to the new obstacle and turns on location adjustment flags of these display contents.

At steps S17-S23, the superimposition drawing control unit 12 adjusts the display positions of the respective display contents in order that were made relocation targets at step S15 or S16, that is, the display contents whose location adjustment flags are on. More specifically, first, at step S17, the superimposition drawing control unit 12 selects a display content (CD) having the lowest priority rank as a position adjustment target of this time. After completion of position adjustment of this display content, at step S23 the superimposition drawing control unit 12 selects, as a position adjustment target of this time, a display content whose priority rank is lowest next to the display content just processed. If its location adjustment flag is on, it is subjected to position adjustment. The display positions of the respective relocation target display contents are adjusted in order by executing steps S18-S23 repeatedly.

More specifically, the display positions of the respective relocation target display contents are adjusted in the following manner. First, at step S19, the obstacle detection device 16 measures a distance to the new obstacle and the superimposition drawing control unit 12 acquires information of a distance in the depth direction (Z-axis direction) from the eye point EP of the driver 19 to the obstacle that is located at a far position on the line of sight.

At step S20, the superimposition drawing control unit 12 sets the display position of the adjustment target display content outside the display prohibition regions A0 and A1 (within the projection surface) in the two-dimensional plane 30 and moves the adjustment target display content to a position that is farther than the obstacle using the distance information acquired at step S19. For example, where the display content is displayed on the road surface, the superimposition drawing control unit 12 changes the display position of the display content so that it is positioned at a farther position on the road surface. At step S21, the superimposition drawing control unit 12 turns off the location adjustment flag of the display-position-adjusted display content.

If the display content cannot be positioned with respect to the road surface or another object (real image) by the display position adjustment at step S20, an icon is displayed for a prescribed time as a replacement of the display content concerned.

The process shown in Fig. 8 is executed repeatedly by the superimposition drawing control unit 12. Thus, the process shown in Fig. 8 is executed and display contents are relocated when necessary at least every time the obstacle detection device 16 detects a new obstacle.

If, for example, the driver 19 has adjusted the position or posture of the seat or changed the position of his or her face or head, the position of the eye point EP to be detected by the line-of-sight detection device 14 and the direction of the line of sight vary and the display positions of the respective display contents are automatically adjusted accordingly. That is, virtual images 17 of the respective display contents are displayed at proper positions so that the relative positional relationships between the virtual images 17 and real images do not vary in the front field of view of the driver 19.

### <Example operation-2>

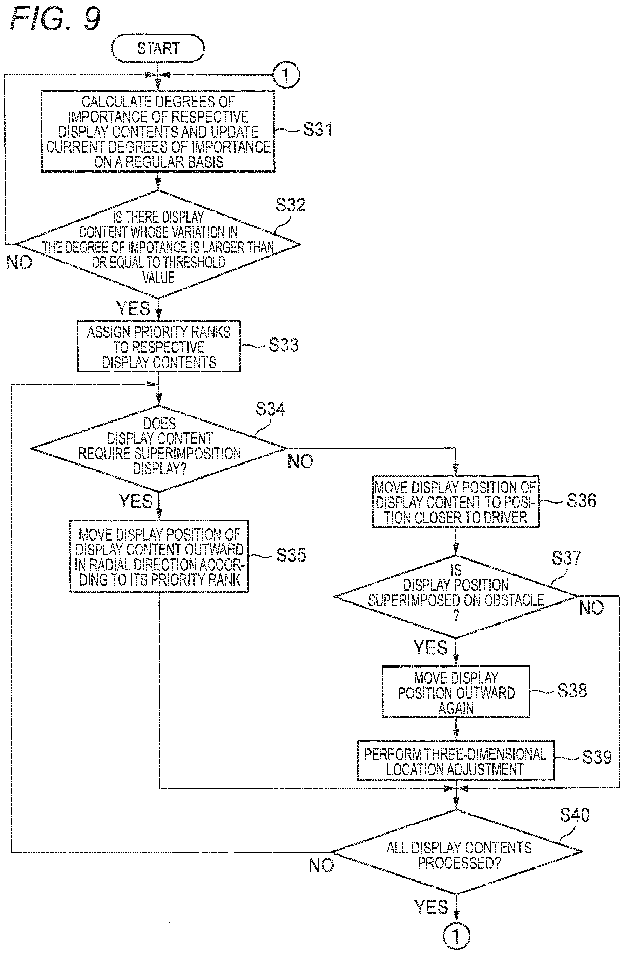

Fig. 9 shows a second example main operation of the vehicular projection display apparatus. The example operation shown in Fig. 9 is a modified version of the first example operation shown in Fig. 8. The superimposition drawing control unit 12 causes the HUD main body 11 to project generated display contents and causes a virtual image 17 to be superimposed on real images using the augmented reality technique. A control shown in Fig. 9 that is performed by the superimposition drawing control unit 12 in doing such superimposition display will be described below.

At step S31, the superimposition drawing control unit 12 calculates the degrees of importance of plural respective display contents (CA-CD) and updates their current degrees of importance on a regular basis. One example is to properly calculate the degrees of importance of respective display contents so that they reflect a variation of the vehicle speed, variations of the distances to respective detected obstacles, a variation of the number of detected obstacles, a variation of the characteristics of the road on which the vehicle is running, a variation of the ambient brightness, a variation of the time slot, or the like.

At step S32, the superimposition drawing control unit 12 compares variation amounts of the respective display contents with a predetermined threshold value. If there exists a display content whose variation in the degree of importance is larger than or equal to the threshold value, the process moves to step S33 to perform relocation of the display contents. That is, in the process shown in Fig. 9, the display contents are relocated according to respective variations of their degrees of importance irrespective of detection of a new obstacle or occurrence of an event that changes the line of sight of the driver 19. By restricting the timing of execution of relocation to only timing when there exists a display content whose degree of importance has changed to a large extent, it becomes possible to avoid frequent relocation and lowering in visibility and prevent the driver 19 from feeling annoying.

At step S33, the superimposition drawing control unit 12 assigns priority ranks to the respective display contents according to their latest degrees of importance (i.e., results of the update at step S31). More specifically, the superimposition drawing control unit 12 elevates the priority rank of a display content whose degree of importance is high and lowers the priority rank of a display content whose degree of importance is low.

At step S34, the superimposition drawing control unit 12 judges whether the processing target display content requires superimposition on a real image. For example, a display content for arousing attention to an obstacle and a display content such as a road sign or a mark on a road surface need to be displayed so as to be suitable for an obstacle or a position on the road (real image). On the other hand, it is not necessary to adjust the position of a display content indicating a vehicle state such as a running speed so as to be superimposed on any real image.

To process a display content that needs to be superimposed on a real image, the process moves from step S34 to step S35. At step S35, the superimposition drawing control unit 12 changes the display position of the processing target display content in the two-dimensional plane 30 so that it is moved outward in the radial direction away from the visual attention center point Pp, according to its priority rank assigned at step S33. A display content having a high priority rank such as one for arousing attention to an obstacle is excluded from the targets of relocation.

To process a display content that need not be superimposed on any real image, the process moves from step S34 to step S36. At step S36, the superimposition drawing control unit 12 moves the processing target display content to a position that is closer to the driver 19 than before the movement. As a result, the visibility of the relocated display content is increased.

For example, in the examples shown in Figs. 7A and 7B, the first region A01 and the third region A03 which are located below the visual attention center point Pp are close to the driver 19 in the depth direction and the second region A02 and the fourth region A04 which are located above the visual attention center point Pp are distant from the driver 19 in the depth direction. Thus, the movement destination of a display content that need not be superimposed on any real image is set in the first region A01 or the third region A03 irrespective of the positions of real images and such a display content is moved to a position that is located below or outside, in the radial direction, the position before the movement.

The relocation at step S36 may cause the processing target display content to be superimposed on a display prohibition region A1 (step S37). In this case, the process moves from step S37 to step S38, where the superimposition drawing control unit 12 moves the display position of the display content outward again.

More specifically, as shown in Fig. 7B, a straight line connecting the visual attention center point Pp and the obstacle center position Pc is rotated about the visual attention center point Pp to search for an angle that prevents the display content display region from overlapping with the display prohibition region A1. The content display region (20B) is relocated on the basis of a direction thus found so as to be located outside the display prohibition region A1.

In relocating the processing target display content, the superimposition drawing control unit 12 also performs three-dimensional location adjustment at step S39. More specifically, in moving the display position of the display content outward in the radial direction in the two-dimensional plane 30, the superimposition drawing control unit 12 moves the display content to a position that is farther than the current display position and outside the display prohibition regions A0 and A1 according to, for example, the positions of real images, that is, a scene outside the vehicle.

### <Advantages of vehicular projection display apparatus>

In the above-described vehicular projection display apparatus, if, for example, a new obstacle appears when virtual images projected by the HUD main body 11 are displayed so as to be superimposed on real images, the display contents are relocated so that their virtual images do not obstruct visual recognition of a real image of the obstacle (S15). This makes it easier to secure the safety of a drive. In a situation that the driver 19 is not aware of the obstacle, display contents whose priority ranks are lower than the priority rank of a display content CA for arousing attention to the new object are relocated to positions that are distant from the new object while the display content CA is kept displayed in the vicinity of the new obstacle (S16). This allows the driver 19 to recognize the presence of the new object easily.

Even without appearance of a new obstacle, if a large change has occurred in the degree of importance of each display content due to a situation change, the display contents are relocated (S35, S36). This makes it easier to secure the safety of a drive because an obstacle that will influence driving with high probability is prevented from being superimposed on a virtual image. Furthermore, since display contents that need not be superimposed on real images are moved to positions that are close to the driver 19 and hence allow them to be visually recognized more easily (S36). Thus, their virtual images are increased in visibility and the driver 19 is prevented from feeling the relocation of the display contents annoying.

Since relocation is performed when the degree of importance has changed to a large extent in each display content (S32), frequent occurrence of relocation can be avoided. Furthermore, if a virtual image of a moved display content is superimposed on an obstacle region, the display content is relocated again to adjust its display position (S38). Thus, the virtual image can be prevented reliably from being superimposed on a real image.

### [Description of symbols]

- 10:: Vehicle body
- 11:: HUD main body
- 12:: Superimposition drawing control unit
- 13:: Navigation device
- 14:: Line-of-sight detection device
- 15:: Advanced driver assistance system
- 16:: Obstacle detection device
- 17:: Virtual image
- 18:: Steering wheel
- 19:: Driver
- 20A, 20B, 20C, 20D:: Content display region
- 21B, 21C, 21D:: Movement vector
- 30:: Two-dimensional plane
- A0, A1, A1B:: Display prohibition region
- A2:: Obstacle region
- A01:: First region
- A02:: Second region
- A03:: Third region
- A04:: Fourth region
- D01, D02:: Detected obstacle
- EP:: Eye point
- Pc:: Obstacle center position
- Pp:: Visual attention center point
- PLT:: Top-left coordinates
- PRB:: Bottom-right coordinates
- WS:: Windshield

## Claims

1. A vehicular projection display apparatus which projects visible information in or in the vicinity of a field of view of a driver (19) so that the visible information is superimposed on real images, comprising:
a display information generation unit which generates pieces of information representing plural respective display contents (CA, CB, CC, CD) to be presented to the driver (19);
a priority rank assigning unit which assigns display priority ranks to the plural respective display contents (CA, CB, CC, CD) generated by the display information generation unit;
an obstacle detection unit (16) which detects an obstacle (D01, D02) that may influence driving of a vehicle; and
a display position adjusting unit which relocates the display positions of the plural display contents (CA, CB, CC, CD) according to the priority ranks assigned by the priority rank assigning unit, respectively, at least when the obstacle detection unit (16) has detected a new obstacle;
**characterized in that**
the display position adjusting unit monitors degrees of importance and their variations of the plural respective display contents (CA, CB, CC, CD) and, if detecting a display content whose variation in the degree of importance is larger than a prescribed value, relocates the display positions of the plural display contents (CA, CB, CC, CD) according to the priority ranks assigned to the plural display contents (CA, CB, CC, CD), respectively.

2. The vehicular projection display apparatus according to claim 1, wherein the display position adjusting unit compares a first priority rank that is assigned to a particular display content (CA) relating to the new obstacle detected by the obstacle detection unit (16) with priority ranks assigned to the others (CB, CC, CD) of the plural display contents (CA, CB, CC, CD) and sets display contents whose priority ranks are lower than the first priority rank as targets of the relocation.

3. The vehicular projection display apparatus according to claim 1, wherein the display position adjusting unit moves, among the plural display contents (CA, CB, CC, CD), display contents other than a particular display content that requires superimposition of display visible information on a real image to prescribed regions that are closer to the driver (19) than display positions before the movement and continues to display the display contents moved.

4. The vehicular projection display apparatus according to any one of claims 1 to 3, wherein if a display content that has been moved by the relocation is superimposed on a region (A2) of an obstacle (D01, D02) detected by the obstacle detection unit (16), the display position adjusting unit again moves the display content to outside the region (A2) of the obstacle (D01, D02).

## Patentansprüche

1. Fahrzeugprojektionsanzeigevorrichtung, die sichtbare Information in oder in der Nähe eines Sichtfelds eines Fahrers (19) projiziert, so dass die sichtbare Information realen Bildern überlagert ist, umfassend:
eine Anzeigeinformations-Erzeugungseinheit, die Teile von Information erzeugt, die mehrere jeweilige Anzeigeinhalte (CA, CB, CC, CD) darstellen, die dem Fahrer (19) zu präsentieren sind;
eine Prioritätsrang-Zuweisungseinheit, die Anzeigeprioritätsränge den mehreren jeweiligen Anzeigeinhalten (CA, CB, CC, CD) zuweist, die von der Anzeigeinformations-Erzeugungseinheit erzeugt werden;
eine Hindernis-Erkennungseinheit (16), die ein Hindernis (D01, D02) erkennt, das das Fahren eines Fahrzeugs beeinflussen kann; und
eine Anzeigepositions-Anpassungseinheit, die die Anzeigeposition der mehreren Anzeigeinhalte (CA, CB, CC CD) verschiebt, entsprechend der Prioritätsränge, die von der Prioritätsrang-Zuweisungseinheit jeweils zugewiesen werden, zumindest wenn die Hindernis-Erkennungseinheit (16) ein neues Hindernis erkannt hat;
**dadurch gekennzeichnet, dass**
die Anzeigepositions-Anpassungseinheit Wichtigkeitsgrade und ihre Abweichungen der mehreren jeweiligen Anzeigeinhalte (CA, CB, CC, CD) überwacht und, wenn ein Anzeigeinhalt, dessen Abweichung im Wichtigkeitsgrad größer ist als ein vorgegebener Wert, erkannt wird, die Anzeigepositionen der mehreren Anzeigeinhalte (CA, CB, CC, CD) entsprechend der Prioritätsränge verschiebt, die den mehreren Anzeigeinhalten (CA, CB, CC, CD) jeweils zugeordnet werden.

2. Fahrzeugprojektionsanzeigevorrichtung nach Anspruch 1, wobei die Anzeigepositions-Anpassungseinheit einen ersten Prioritätsrang, der einem bestimmten Anzeigeinhalt (CA) zugeordnet ist, der sich auf das neue Hindernis bezieht, das von der Hindernis-Erkennungseinheit (16) erkannt wird, mit Prioritätsrängen, die den anderen (CB, CC, CD) der mehreren Anzeigeinhalte (CA, CB, CC, CD) zugeordnet sind, vergleicht und Anzeigeinhalte, deren Prioritätsränge niedriger sind als der erste Prioritätsrang, als Ziele der Verschiebung festlegt.

3. Fahrzeugprojektionsanzeigevorrichtung nach Anspruch 1, wobei die Anzeigepositions-Anpassungseinheit unter den mehreren Anzeigeinhalten (CA, CB, CC, CD) andere Anzeigeinhalte als einen bestimmten Anzeigeinhalt, der eine Überlagerung sichtbarer Anzeigeinformation auf einem realen Bild benötigt, zu vorgegebenen Bereichen, die näher am Fahrer (19) sind als Anzeigepositionen vor der Bewegung, bewegt und weiterhin den bewegten Anzeigeinhalt anzeigt.

4. Fahrzeugprojektionsanzeigevorrichtung nach einem der Ansprüche 1 bis 3, wobei, wenn ein Anzeigeinhalt, der von der Verschiebung bewegt wurde, auf einem Bereich (A2) eines von der Hindernis-Erkennungseinheit (16) erkannten Hindernisses (D01, D02) überlagert ist, die Anzeigepositions-Anpassungseinheit den Anzeigeinhalt erneut bewegt nach außerhalb des Bereichs (A2) des Hindernisses (D01, D02).

## Revendications

1. Appareil d'affichage par projection de véhicule qui projette des informations visibles dans ou à proximité d'un champ de vision d'un conducteur (19) de sorte que les informations visibles sont superposées à des images réelles, comprenant:
une unité de génération d'informations d'affichage qui génère des éléments d'information représentant plusieurs contenus d'affichage respectifs (CA, CB, CC, CD) à présenter au conducteur (19);
une unité d'attribution de rang de priorité qui attribue des rangs de priorité d'affichage aux différents contenus d'affichage respectifs (CA, CB, CC, CD) générés par l'unité de génération d'informations d'affichage;
une unité de détection d'obstacle (16) qui détecte un obstacle (D01, D02) pouvant influencer la conduite d'un véhicule; et
une unité de réglage de la position d'affichage qui déplace les positions d'affichage des différents contenus d'affichage (CA, CB, CC, CD) en fonction des rangs de priorité attribués par l'unité d'attribution des rangs de priorité, respectivement, au moins lorsque l'unité de détection d'obstacles (16) a détecté un nouvel obstacle;
**caractérisé en ce que**
l'unité de réglage de la position d'affichage surveille les degrés d'importance et leurs variations des différents contenus d'affichage respectifs (CA, CB, CC, CD) et, si elle détecte un contenu d'affichage dont la variation du degré d'importance est supérieure à une valeur prescrite, elle déplace les positions d'affichage des différents contenus d'affichage (CA, CB, CC, CD) en fonction des rangs de priorité attribués aux différents contenus d'affichage (CA, CB, CC, CD), respectivement.

2. Appareil d'affichage par projection de véhicule selon la revendication 1, dans lequel l'unité de réglage de la position d'affichage compare un premier rang de priorité qui est attribué à un contenu d'affichage particulier (CA) relatif au nouvel obstacle détecté par l'unité de détection d'obstacle (16) avec les rangs de priorité attribués aux autres (CB, CC, CD) des plusieurs contenus d'affichage (CA, CB, CC, CD) et définit les contenus d'affichage dont le rang de priorité est inférieur au premier rang de priorité comme cibles de la réinstallation.

3. Appareil d'affichage par projection de véhicule selon la revendication 1, dans lequel l'unité de réglage de la position d'affichage déplace, parmi la pluralité de contenus d'affichage (CA, CB, CC, CD), des contenus d'affichage autres qu'un contenu d'affichage particulier qui nécessite la superposition d'informations visibles d'affichage sur une image réelle à des zones prescrites qui sont plus proches du conducteur (19) que les positions d'affichage avant le déplacement et continue à afficher les contenus d'affichage déplacés.

4. Appareil d'affichage par projection de véhicule selon l'une quelconque des revendications 1 à 3, dans lequel si un contenu d'affichage qui a été déplacé par le déplacement est superposé à une zone (A2) d'un obstacle (D01, D02) détecté par l'unité de détection d'obstacle (16), l'unité de réglage de la position d'affichage déplace à nouveau le contenu d'affichage à l'extérieur de la zone (A2) de l'obstacle (D01, D02).
